# EUROPÄISCHE PATENTANMELDUNG

(11) **EP 4 238 747 A1**
(43) Veröffentlichungstag der Anmeldung: **06.09.2023**
(21) Anmeldenummer: 23159821.0
(22) Anmeldetag: 03.03.2023
(51) Int. Cl.: B29C 70/54, B32B 15/02, B29C 65/48, B29C 70/88, B29C 73/00, B29C 73/24, B29C 65/00

(54) **VERFAHREN ZUM APPLIZIEREN EINES WERKSTOFFES AUF EIN FASERVERBUNDBAUTEIL**

(30) Priorität: 04.03.2022 DE 102022105181
(71) Anmelder: Deutsches Zentrum für Luft- und Raumfahrt e.V., 53227 Bonn-Oberkassel (DE)
(72) Erfinder: Heilmann, Lennert, 28201 Bremen (DE)
(74) Vertreter: Gramm, Lins & Partner Patent- und Rechtsanwälte PartGmbB

(57) **Zusammenfassung**

Die Erfindung betrifft ein Verfahren zum Applizieren eines Werkstoffes auf ein Faserverbundbauteil innerhalb eines Applikationsbereiches des Faserverbundbauteils, wobei das Faserverbundbauteil aus einem Faserverbundwerkstoff aufweisend ein Fasermaterial und ein Matrixmaterial hergestellt wird, wobei das Verfahren die folgenden Schritte umfasst:
- Bereitstellen zumindest eines metallischen, maschenförmigen Abreißtextils, welches aus Metallfäden als Einzelfilamente gebildet ist und bei dem die Summe aller offenen Flächen der Maschen des maschenförmigen Abreißtextils weniger als 30% und mehr als 10 % der gesamten Grundfläche des Abreißtextils entspricht,
- Anordnen des mindestens einen metallischen, maschenförmigen Abreißtextils auf eine aus dem Fasermaterial des Faserverbundwerkstoffes gebildeten Faserpreform im Applikationsbereich,
- Aushärten des das Fasermaterial der Faserpreform einbettenden Matrixmaterials des Faserverbundwerkstoffes sowie ein das metallische, maschenförmige Abreißtextil einbettendes Matrixmaterial in einem gemeinsamen Prozessschritt,
- wobei zumindest das das metallische, maschenförmige Abreißtextil einbettende Matrixmaterial eine mit der Oxidschicht der Metallfäden des metallischen, maschenförmigen Abreißtextils chemisch reagierende und/oder physikalisch interagierende Komponente enthält, und
nachdem das Matrixmaterial der Faserpreform und das Matrixmaterial des maschenförmigen Abreißtextils zumindest teilweise ausgehärtet ist,
- Abreißen des mit der Faserpreform verbundenen metallischen, maschenförmigen Abreißtextils und
- Applizieren des Werkstoffes in den Applikationsbereich nach dem Abreißen des metallischen, maschenförmigen Abreißtextils.

## Beschreibung

Die Erfindung betrifft ein Verfahren zum Applizieren eines Werkstoffes auf ein Faserverbundbauteil innerhalb eines Applikationsbereiches des Faserverbundbauteils, wobei das Faserverbundbauteil aus einem Faserverbundwerkstoff aufweisend ein Fasermaterial und ein Matrixmaterial hergestellt wird.

Aufgrund ihrer gewichtsspezifischen Festigkeit und Steifigkeit sind Faserverbundwerkstoffe bei der Herstellung von jedweden Bauteilen kaum mehr wegzudenken. Faserverbundwerkstoffe weisen dabei hauptsächlich zwei wesentliche Bestandteile auf, nämlich zum einen ein Fasermaterial und zum anderen ein Matrixmaterial. Bei der Herstellung von Faserverbundbauteilen aus einem solchen Faserverbundwerkstoff wird dabei in der Regel das Fasermaterial in die entsprechende spätere Bauteilform gebracht und dann das das Fasermaterial einbettende Matrixmaterial ausgehärtet. Das Aushärten geschieht in den allermeisten Fällen durch Temperatur- und ggf. Druckbeaufschlagung, wobei durch das Aushärten die lasttragenden Fasern des Fasermaterials in ihre vorbestimmte Richtung gezwungen werden und dabei zusammen mit dem ausgehärteten Matrixmaterial eine integrale Einheit zur Lastabtragung bilden.

Das Matrixmaterial, welches das Fasermaterial des Faserverbundwerkstoffes entsprechend einbettet, kann dabei bereits in dem Fasermaterial enthalten sein (sogenannte Prepregs) oder später in eine sogenannte Faserpreform, die aus trockenen Fasermaterialien aufgebaut wurde, infundiert werden. Eine Faserpreform stellt dabei eine Art Vorbauteil dar, das aus dem Fasermaterial des Faserverbundwerkstoffes gebildet und dabei zumindest teilweise die spätere Bauteilform des herzustellenden Faserverbundbauteils erhält. Durch das Aushärten des Matrixmaterials, welches in dem Fasermaterial der Faserpreform eingebettet ist, kann so das Faserverbundbauteil hergestellt werden. Die Faserpreform kann demzufolge sowohl aus trockenem Fasermaterial als auch aus vorimprägnierten Fasermaterialien eines Faserverbundwerkstoffes hergestellt werden.

Gegenüber der Gewichtseinsparung und dem potentiellen Nutzen für den Leichtbau weisen Faserverbundwerkstoffe bei der Herstellung einige Nachteile gegenüber isotropen Werkstoffen auf, da die Bauteilform eines Faserverbundbauteils in der Regel durch entsprechende Formwerkzeuge gebildet werden muss, welche eine Art Negativabdruck des späteren Bauteils darstellen. Daher werden nicht selten komplexe Faserverbundbauteile aus verschiedenen Bauelementen, die entweder aus Faserverbundwerkstoffen hergestellt wurden oder aus isotropen Werkstoffen zusammengesetzt werden, miteinander verklebt, um die komplexe Geometrie herstellen zu können.

Auch die Reparatur von Faserverbundbauteilen kann bei lokalen Beschädigungen durch Kleben von Reparaturpatches erfolgen, indem zunächst an der beschädigten Stelle das Fasermaterial und Matrixmaterial entfernt und so die beschädigte Stelle vorbereitet wird und anschließend dann ein Reparaturpatch eingeklebt wird, sodass der durch den Reparaturvorgang gebildete Freiraum durch den Reparaturpatch ausgefüllt wird. Ein derartiges Kleben, bei dem mindestens einer der Fügepartner ein Faserverbundbauteil aus einem Faserverbundwerkstoff ist, ist dabei nicht ganz unkritisch hinsichtlich der Zertifizierung und Validierung. So müssen gerade im Bereich der Luft- und Raumfahrt hohe Maßstäbe an eine derartige Klebverbindung gestellt werden, um insbesondere auch bei sicherheitskritischen Bauteilen den Anforderungen an die Sicherheit zu genügen. Es ist daher von besonderem Interesse, derartige Klebverbindungen prozesssicher auszuführen.

Oftmals werden solche Faserverbundbauteile auch durch Lackierungen und Beschichtungen veredelt, so dass derartige Werkstoffe, die auf ein solches fertig hergestelltes Faserverbundbauteil appliziert werden, prozesssicher aufgebracht und auf der Oberfläche eines solchen Faserverbundbauteils sicher halten müssen. Dabei besteht grundsätzlich das Bedürfnis, dass derartige Beschichtungen auch unter gegebenen Stressbedingungen sicher an der Oberfläche des Faserverbundbauteils haften.

Aus der DE 10 2017 113 430 A1 ist ein Verfahren zum Prüfen einer Fügeoberfläche eines Faserverbundbauteils sowie ein Verfahren zum Verkleben bekannt, indem ein Prüfgewebe mit einer Klebstoffgrundierung auf das Faserverbundbauteil aufgeklebt und ausgehärtet und anschließend abgerissen wird, wobei die Fügeoberfläche qualitativ hinsichtlich des Bruchbildes analysiert wird. Außerdem lässt sich auch ein derartiges Bruchbild, das durch die Klebstoffgrundierung gebildet wurde, durch Auftragen eines Klebwerkstoffes und Fügen mit einem weiteren Bauteil eine Klebverbindung herstellen.

Es hat sich allerdings gezeigt, dass die zusätzliche Klebstoffgrundierung den gesamten Herstellungsprozess verkomplizieren kann. Außerdem kann die Klebstoffgrundierung nur auf ein bereits hergestelltes Substrat aufgebracht werden, wodurch Co-bonding Verfahren zur Herstellung komplexer Bauteile ausgeschlossen werden.

Es hat sich außerdem gezeigt, dass die in der Praxis oftmals verwendeten Multifilamentgewebe als Abreißgewebe für ein derartiges Verfahren bei bestimmten zu applizierenden Werkstoffen nicht geeignet sind. Denn einerseits soll durch das Abreißen des Gewebes eine saubere, aktivierte Oberfläche erzeugt werden, während andererseits das Gewebe möglichst ohne hohen Kraftaufwand händisch abgezogen werden soll, wobei das Bauteil dabei nicht beschädigt werden darf. Um eine besonders adhäsionsfähige Oberfläche zu erzeugen, müssen bei polymeren Matrixwerkstoffen chemische Ketten des Matrixwerkstoffes aufgebrochen werden. Dies gelingt dadurch, dass mit dem Gewebe ein Teil des darunterliegenden Matrixmaterials entfernt wird. Um Matrixmaterial herauszubrechen, wird jedoch ein erhöhter Kraftaufwand benötigt und die Gefahr einer Beschädigung der Faserverbundstruktur, insbesondere der Verstärkungsfasern, steigt dadurch deutlich an.

Aus der US 7,736,452 B2 ist ein Verfahren zum zerstörungsfreien Überprüfen einer Klebverbindung bei der Reparatur von Faserverbundbauteilen bekannt, wobei hier die Überprüfung der Klebverbindung indirekt erfolgt. Die beschädigte Stelle an dem Faserverbundbauteil wird in einem ersten Schritt repariert und ein entsprechendes eingeklebtes Reparaturpatch verwendet. Anschließend wird in der näheren Umgebung der reparierten Stelle ein Testpatch, welches die gleichen Eigenschaften und das gleiche Material aufweist, wie das Reparaturpatch, aufgeklebt und nach dem Aushärten der Klebverbindung mit einer entsprechenden Kraft belastet. Hält der Testpatch der derart aufgebrachten Kraft stand, so wird von der Haltbarkeit der reparierten Stelle ausgegangen.

Aus der US 2008/0011075 A1 ist ein Verfahren zur Qualitätskontrolle eines Faserverbundbauteils und einer möglichen Klebverbindung bekannt, wobei hier eine metallische Struktur auf die Oberfläche des Faserverbundbauteils aufgeklebt wird. Die metallische Struktur weist dabei eine Sollbruchstelle auf. Nach dem Aushärten der Klebverbindung wird die metallische Struktur nun mit einer Kraft beaufschlagt, wobei von einer wirksamen Klebverbindung mit der Oberfläche des Faserverbundbauteils dann ausgegangen wird, wenn zunächst die Sollbruchstelle bricht. Bricht anstelle der Sollbruchstelle jedoch die Klebverbindung, so war diese nicht fehlerfrei.

Aus der DE 10 2018 111 306 A1 ist ein Verfahren zur Herstellung eines Faserverbundbauteils bekannt, bei dem ein Werkstoff nachträglich appliziert werden soll. Hierfür wird ein Monofilamentgewebe mit mehreren Einzelfilamenten bereitgestellt, bei dem die Summe aller offenen Flächen der Maschen des Monofilamentgewebes mindestens 30% der gesamten Grundfläche des Monofilamnetgewebes entspricht. Das Monofilamentgewebe wird dann auf das Bauteil appliziert und nach dessen Herstellung abgerissen, um die dortige Oberfläche für die Applikation eines weiteren Werkstoffes, bspw. ein Klebstoff, vorzubereiten.

Es hat sich allerdings gezeigt, dass aufgrund der Offenporigkeit und der relativ großen Summe der offenen Flächen von mehr als 30 % es manchmal zum sogenannten partiellen Kohäsionsbruch (PCF) kommt, bei dem der Riss des Matrixmaterials in den Maschen des Gewebes zunächst kohäsiv durch das Matrixmaterial verläuft und dann jedoch an die Bauteiloberfläche gelangt, bevor das nächste Filamenten des Abreißgewebes erreicht ist. Dadurch entstehen mittig in den Bereichen der Maschen ungebrochene Bereiche, die schlechter klebbar sind. Ein entsprechend hohe Klebekraft sowie einem Verifizierung kann dann nicht mehr sichergestellt werden.

Es hat sich außerdem gezeigt, dass bei großen Maschenöffnungen es dazu kommen kann, dass lose Bruchstücke des Matrixharzes auf Bauteiloberfläche zurückbleiben. Diese können eine nachträgliche Applikation eines insbesondere artfremden Werkstoffes deutlich erschweren.

Ein weiterer Nachteil großer Maschenöffnungen besteht darin, dass hierfür meist relativ dicke Abreißgewebe benötigt werden, um die notwendige Stabilität beim Abreißen zu gewährleisten. Hierdurch wird jedoch auch die Menge an Matrixharz, die für den Applikationsvorgang notwendig ist, erhöht, wodurch mehr Kraft beim Abreißen aufgewendet werden muss. Dies erhöht jedoch die Gefahr eines irregulären Bruches des Abreißgewebes und führt somit zu einer unzuverlässigen Handhabung.

Vor diesem Hintergrund ist es daher Aufgabe der vorliegenden Erfindung ein verbessertes Verfahren zum Applizieren eines Werkstoffes auf ein Faserverbundbauteil anzugeben.

Die Aufgabe wird mit dem Verfahren zum Applizieren eines Werkstoffes gemäß Anspruch 1 erfindungsgemäß gelöst. Vorteilhafte Ausgestaltungen der Erfindung finden sich in den entsprechenden Unteransprüchen.

Gemäß Anspruch 1 wird ein Verfahren zum Applizieren eines Werkstoffes auf ein Faserverbundbauteil innerhalb eines Applikationsbereiches des Faserverbundbauteils vorgeschlagen, wobei das Faserverbundbauteil aus einem Faserverbundwerkstoff aufweisend ein Fasermaterial und ein Matrixmaterial hergestellt wird bzw. werden soll. Der zu applizierende Werkstoff kann dabei beispielsweise ein Klebstoff sein, um das Faserverbundbauteil mit einem anderen Bauelement zu fügen. Der Werkstoff kann aber auch der Beschichtung des Faserverbundbauteils dienen, beispielsweise in Form von Lacken.

Unter dem Applizieren eines Werkstoffes auf ein Faserverbundbauteil wird dabei verstanden, dass ein Werkstoff stoffschlüssig mit dem Faserverbundbauteil verbunden wird, bspw. ein dem Faserverbundwerkstoff fremder oder anderer Werkstoff, der kein Faserverbundwerkstoff ist, so dass der applizierte Werkstoff stoffschlüssig an dem Faserverbundbauteil hält. Das Applizieren des Werkstoffes soll dabei insbesondere nach dem vollständigen Aushärten des das Fasermaterial einbettenden Matrixmaterials erfolgen. Denkbar ist aber auch, dass das Applizieren bereits zu einem Zeitpunkt erfolgt, zu dem das Matrixmaterial noch nicht vollständig ausgehärtet ist, z.B. durch eine nicht vollständig abgelaufene Härtungsreaktion oder durch ein speziell angepasstes Harz-Härter-Verhältnis in dem das Fasermaterial einbettenden Matrixmaterials.

Erfindungsgemäß wird dabei ein metallisches, maschenförmiges Abreißtextil bereitgestellt, welches aus Metallfäden als Einzelfilamente gebildet ist und bei dem die Summe aller offenen Flächen der Maschen des maschenförmigen Abreißtextils weniger als 30% und mehr als 10 % der gesamten Grundfläche des Abreißtextils entspricht. Das metallische, maschenförmige Abreißtextil weist dabei zumindest an der dem Applikationsbereich zugewandten Seite eine Oxidschicht auf. Vorzugsweise weisen die Einzelfilamente vollumfänglich eine Oxidschicht auf.

Dieses so bereitgestellte metallische, maschenförmige Abreißtextil wird anschließend auf eine aus dem Fasermaterial des Faserverbundwerkstoffes gebildeten Faserpreform im Applikationsbereich angeordnet. Die Faserpreform wurde dabei in einem Formwerkzeug durch Ablage von Fasermaterial des Faserverbundwerkstoffes hergestellt und kann zum Zeitpunkt des Anordnens des Abreißtextils entweder aus trockenen Fasermaterialien bestehen oder aus bereits vorimprägnierten Fasermaterialien.

Nachdem das Abreißtextil auf das Fasermaterial der Faserpreform im Applikationsbereich angeordnet wurde, wird das das Fasermaterial der Faserpreform einbettende Matrixmaterial sowie ein das Abreißtextil einbettendes Matrixmaterial in einem gemeinsamen Prozessschritt ausgehärtet, wobei zumindest das das metallische, maschenförmige Abreißtextil einbettende Matrixmaterial eine mit der Oxidschicht der Metallfäden des metallischen, maschenförmigen Abreißtextils chemisch reagierende und/oder physikalisch interagierende Komponente enthält.

Wurde die Faserpreform mithilfe von trockenen Fasermaterialien hergestellt, so muss vor dem Aushärten des Matrixmaterials ein dazwischenliegender Infusionsschritt durchgeführt werden, dem ein Matrixmaterial in das Fasermaterial und gegebenenfalls in das Abreißtextil infundiert wird. Wurden hingegen vorimprägnierte Fasermaterialien verwendet, so kann dieser Prozessschritt entfallen.

Durch das Aushärten der Matrixmaterialien entsteht im Grenzbereich zwischen der Faserpreform und dem metallischen Abreißtextil eine feste Verbindung, wodurch das Abreißtextil mit dem hergestellten Faserverbundbauteil fest verbunden wird. Durch den mit der Oxidschicht des Abreißtextils interagierenden und/oder reagierenden Bestandteil des Matrixmaterials (bspw. Harz) interagiert und/oder reagiert dieses im Grenzbereich zwischen Abreißtextil und Faserpreform, wodurch funktionelle Gruppen an der Oxidschicht der Metallfilamente absorbiert werden und dadurch nicht mehr mit dem übrigen Reaktionsgemisch reagieren können. Hierdurch entsteht eine verbesserte Anbindung der Metallfilamente des Abreißtextils an das Bauteil.

Nachdem das Matrixmaterial der Faserpreform und das Matrixmaterial des maschenförmigen Abreißtextils zumindest teilweise ausgehärtet sind, wird das mit der Faserpreform verbundenen metallischen, maschenförmigen Abreißtextils abgerissen bzw. abgeschält und anschließend der gewünschte Werkstoff in den Applikationsbereich nach dem Abreißen des Abreißtextils appliziert.

Bei dem Abreißen des Abreißtextils wird die Verbindung zwischen den Metallfilamenten des Abreißtextils und dem Bauteil aufgebrochen, sodass an der Fügeoberfläche reaktive Moleküle des Matrixharzes vorhanden sind. Diese bieten eine besonders gute und prozesssichere Grundlage für einen weiteren Fügeprozess. Die reaktiven Moleküle können im darauffolgenden Klebeprozess mit dem aufgetragenen Klebstoff oder Matrixharz chemisch reagieren und/oder physikalisch interagieren, sodass eine qualitativ hochwertige Verbindung entsteht.

Die relative geringe offene Maschenfläche des Abreißtextils geht mit einer Verringerung der Schälkraft beim Abschälen vom Bauteil einher. Dies ist wünschenswert, da das Abschälen häufig manuell erfolgt und die zum Abschälen sehr offener Gewebe erforderliche Kraft ohne Hilfsmittel nur schwer aufgebracht werden kann. Darüber hinaus wird durch eine geringere Schälkraft die Wahrscheinlichkeit reduziert, dass beim Abschälen das Bauteil beschädigt wird.

Es wird hierdurch möglich, für den Einsatzzweck dünne Abreißtextile zu verwenden, die nur eine sehr dünne Harzschicht oberhalb der Verstärkungsfasern hinterlassen. Offene, großporige Gewebe reißen häufig bei geringer Gewebedicke erfordern zwecks ausreichender Reißfestigkeit eine große Gewebedicke und somit einen großen Filamentdurchmesser. Dabei hinterlassen sie eine dicke Harzschicht auf dem Bauteil. Bei der vorliegenden Erfindung können hingegen Abreißtextile mit einer geringen offenen Fläche und einer geringen Gewebedicke verwendet werden, die für den Anwendungsfall eine hinreichend hohe Reißfestigkeit aufweisen.

Ein weiterer Vorteil dünner Abreißgewebe ist, dass die zur Infusion des trockenen Abreißgewebes benötigte Harzmenge gering ist und dadurch auch aus überschüssigem Harz einer Faserpreform aus vorimprägnierten Fasern (Prepreg) stammen kann. Im Falle dicker und großmaschiger Abreißgewebe reicht die überschüssige Harzmenge der Faserpreform oftmals nicht aus, um das Abreißgewebe vollständig zu infundieren. In diesem Fall ist ein vorimprägniertes Abreißgewebe erforderlich, was jedoch ökonomisch nachteilig sein kann.

Des Weiteren kann mit der vorliegenden Erfindung der sogenannte partielle Kohäsionsbruch vermieden werden, da aufgrund der relativ geringen offenen Maschenfläche und der damit einhergehenden kleinen Öffnungsweite das Phänomen des partielle Kohäsionsbruchs nicht auftritt.

Des Weiteren kann mit der vorliegenden Erfindung eine verbesserte Anbindung des applizierten Werkstoffes, beispielsweise eines Klebstoffes, erreicht werden, da das Abreißtextil eine Art Abstandsgitter aus Matrixmaterial hinterlässt, das wie eine Art Reißverschluss den zu applizierenden Werkstoff in Art eines Formschlusses aufnimmt.

Bei einer chemischen Reaktion bilden sich bspw. kovalente Bindungen, während physikalische Interaktion bspw. Van-Der-Waals-Kräfte beinhaltet. Prinzipiell können bei der Interaktion zwischen Matrixharz und Metallgewebe als auch bei einem ggf. späteren Klebeschritt sowohl chemische Reaktionen als auch physikalische Interaktion auftreten.

Gemäß einer Ausführungsform ist vorgesehen, dass die mit der Oxidschicht reagierende und/oder interagierende Komponente ein Härter ist, insbesondere ein Aminhärter ist. Die zwischen der Oxidschicht (bspw. Chromoxid) und aminhärtenden Expoxidharzen auftretenden Reaktionen und/oder Interaktionen werden im Wesentlichen Wasserstoffbrücken zugeschrieben, die teilweise als chemische Reaktionen aber auch teilweise als physikalische Interaktion beschrieben werden.

Gemäß einer Ausführungsform ist vorgesehen, dass die mit der Oxidschicht reagierende und/oder interagierende Komponente sowohl in dem das Fasermaterial der Faserpreform einbettenden Matrixmaterial als auch in dem das metallische, maschenförmige Abreißtextil einbettende Matrixmaterial enthalten ist.

Gemäß einer Ausführungsform ist vorgesehen, dass das Matrixmaterial, welches das metallische, maschenförmige Abtreißtextil einbettet, das Matrixmaterial des Faserverbundwerkstoffes ist, welches das Fasermaterial der Faserpreform einbettet, oder dass das Matrixmaterial, welches das metallischen, maschenförmige Abtreißtextil einbettet, ein von dem Matrixmaterial des Faserverbundwerkstoffes, welches das Fasermaterial der Faserpreform einbettet, verschiedenes Material ist.

Gemäß einer Ausführungsform ist vorgesehen, dass das Fasermaterial der Faserpreform und/oder das metallische, maschenförmige Abreißtextil mit dem jeweiligen Matrixmaterial vorimprägniert sind oder dass das Matrixmaterial des Faserverbundwerkstoffes n einem Infusionsschritt in das Fasermaterial der Faserpreform infundiert wird.

Gemäß einer Ausführungsform ist vorgesehen, dass als Werkstoff ein Klebstoff appliziert und ein weiteres Bauelement mittels des applizierten Klebstoffes an das aus der Faserpreform hergestellte Faserverbundbauteil klebend gefügt wird und/oder dass als Werkstoff eine Beschichtung appliziert wird.

Gemäß einer Ausführungsform ist vorgesehen, dass das metallische, maschenförmige Abreißtextil derart bereitgestellt wird, dass das Verhältnis von Maschenweite zur Breite der metallischen Einzelfilamente im Wesentlichen 1:1 innerhalb einer Toleranz von 10% entspricht.

Durch dieses Verhältnis wird im späteren Applikationsprozess eine besonders hohe Festigkeit und Effektivität des Formschlusses mit dem zu applizierenden Werkstoff erzielt.

Gemäß einer Ausführungsform ist vorgesehen, dass das metallische, maschenförmige Abreißtextil kalandriert bereitgestellt wird.

Gemäß einer Ausführungsform ist vorgesehen, dass das metallische, maschenförmige Abreißtextil derart bereitgestellt wird, die Einzelfilamente aus einem nicht-rostenden Stahl, insbesondere mit einer Chrom-Oxidschicht, gebildet sind.

Gemäß einer Ausführungsform ist vorgesehen, dass das metallische, maschenförmige Abreißtextil als Köperbindung oder Leinenbindung bereitgestellt wird.

Gemäß einer Ausführungsform ist vorgesehen, dass das metallische, maschenförmige Abreißtextil derart bereitgestellt wird, dass die Maschenweite zwischen 20 µm bis 150 µm, vorzugsweise von 30 µm bis 100 µm, beträgt und/oder dass die Dicke 50 µm bis 200 µm beträgt.

Im Falle der Vorbereitung großer Fügeflächen kann es wünschenswert sein, das Gewebe nicht in einem Stück, sondern in schmaleren Streifen vom Bauteil abzuschälen. Dazu wird in das am Bauteil befindlichen Abreißtextil (vorzugsweise in einem Randbereich) ein Schnitt eingebracht, bzw. dieses eingeritzt (perforiert) und anschließend der so definierte Streifen abgeschält. Das gesamte, großflächige Abreißtextil lässt sich dann in Streifen mit definierter Breite abschälen, wodurch die Oberfläche vollständig aufgebrochen wird.

Die Erfindung wird anhand der beigefügten Figuren beispielhaft näher erläutert. Es zeigen:
- Figur 1a-1d: Schematische Darstellung der wesentlichen Verfahrensschritte des erfindungsgemäßen Verfahrens;
- Figur 2: Schematische Darstellung eines metallischen Abreißtextils mit Verhältnis 1:1;
- Figur 3: Schematische Darstellung eines partiellen Kohäsionsbruches gemäß den Verfahren nach dem Stand der Technik;
- Figur 4: Querschnittsdarstellung einer Bauteiloberfläche nach Entfernen des Abreißtextils in einer Makroskopfaufnahme;
- Figur 5: Darstellung einer Applikation eines Werkstoffes mit Formschluss.

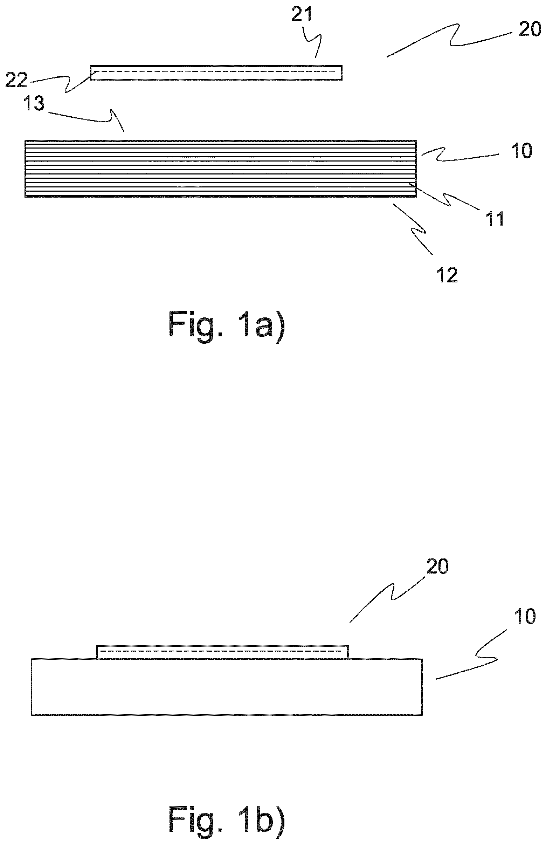

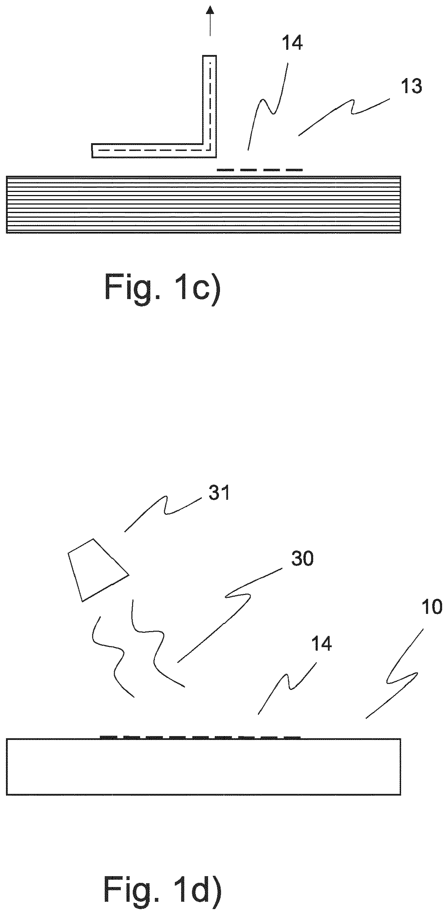

In den Figuren 1a-1d wird ein möglicher Verlauf des erfindungsgemäßen Verfahrens zum Applizieren eines Werkstoffes dargestellt. So wird im ersten Schritt 1a zunächst eine Faserpreform 10 bereitgestellt, die zumindest teilweise die spätere Bauteilform des herzustellenden Faserverbundbauteils aufweist. Die Faserpreform 10 ist dabei aus einem Fasermaterial 11 gebildet worden, indem mehrere Lagen Fasermaterialien übereinandergelegt wurden. Im Beispiel der Figur 1a ist eine sehr stark vereinfachte Bauteilform dargestellt. Es ist selbstverständlich, dass hier jede beliebige komplexe Bauteilform hergestellt werden kann.

Des Weiteren wurden vorimprägnierte Fasermaterialien 11 verwendet, so dass bereits bei der Herstellung der Faserpreform 10 das das Fasermaterial 11 einbettende Matrixmaterial 12 in der Faserpreform 10 enthalten ist.

Des Weiteren wird ein metallisches, maschenförmiges Abreißtextil 20 bereitgestellt, das ebenfalls bereits ein Matrixmaterial 21 enthält und somit ebenfalls vorimprägniert ist. Das Abreißtextil 20 weist eine Mehrzahl von Metallfäden 22 auf, die als Einzelfilamente ausgebildet sind.

Im nächsten Verfahrensschritt 1b wird nun das Abreißtextil 20 innerhalb eines Applikationsbereiches 13 der Faserpreform angeordnet, wobei innerhalb des Applikationsbereiches 13 später ein anderer Werkstoff appliziert werden soll. Im Schritt 1b wird aber nun zunächst in den Applikationsbereich 13 das Abreißtextil 20 angeordnet, wobei dabei das Matrixmaterial 12 der Faserpreform 10 und das Matrixmaterial 21 des Abreißtextil 20 miteinander in Berührung kommen und ggf. sich miteinander im Grenzbereich (Grenzschicht) vermischen.

Anschließend wird das Matrixmaterial 12 der Faserpreform 10 und das Matrixmaterial 21 des Abreißtextil 20 zumindest teilweise ausgehärtet, wobei hierdurch das Abreißtextil 20 insbesondere stoffschlüssig mit der Faserpreform 10 bzw. dem Faserverbundbauteil verbunden wird.

Anschließend wird, wie in Figur 1c gezeigt, das Abreißtextil 20 abgerissen, so dass die stoffschlüssige Verbindung zwischen dem Abreißtextil 20 und dem Faserverbundbauteil bzw. der Faserpreform 10 innerhalb des Applikationsbereiches 13 kohäsiv aufgebrochen wird. Die dabei entstandene raue Oberfläche 14 innerhalb des Applikationsbereiches 13 weist dabei eine hohe Oberflächenenergie auf, wobei durch die Verwendung eines Abreißtextil insbesondere verhindert wird, dass Verstärkungsfasern des Fasermaterials 11 der Faserpreform 10 mit herausgerissen und beschädigt werden.

Anschließend wird im Schritt 1d der eigentliche Werkstoff 30 innerhalb des Applikationsbereiches 13 appliziert, was beispielsweise mithilfe eines Applikators 31 erfolgen kann.

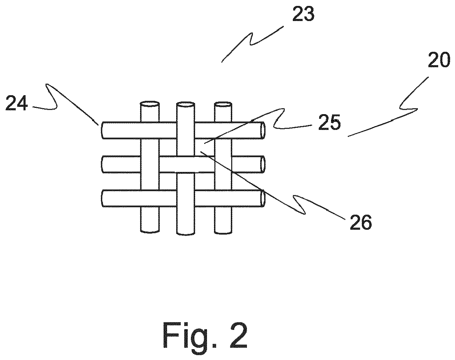

Figur 2 zeigt schematisch stark vereinfacht einen Ausschnitt aus einem metallischen, maschenförmigen Abreißtextil 20, bei dem die Kettfäden 23 und der oder die Schussfäden 24 aus einem metallischen Einzelfilament bestehen. Das bedeutet, dass die Kettfäden 23 bzw. die Schussfäden 24 keine Multifilamente sind und somit nicht mehrere Filamente an sich aufweisen. Vielmehr besteht jeder Kettfaden 23 oder Schussfaden 24 aus einem einzelnen Filament bzw. einem metallischen Draht. Eine Masche 25 wird dabei durch die jeweiligen Kettfäden bzw. Schussfäden begrenzt, wobei die offene Fläche 26 einer Masche 25 dabei derjenige Bereich ist, der durch die Maschenweite geometrisch definiert wird.

Diese offene Fläche 26 aller Maschen des Abreißtextils entspricht dabei weniger als 30 % der gesamten Grundfläche des Abreißtextils. Vorzugsweise ist dabei das Verhältnis zwischen dem Durchmesser eines einzelnen Filamentes, beispielsweise eines Kettfadens 24 oder eines Schussfadens 24, und der Maschenweite der Maschen 25 im Wesentlichen 1:1 innerhalb einer Toleranz von ca. ± 30%, vozugsweise ± 20% und besonders vorzugsweise ± 10%.

Beispiele für besonders vorteilhafte Spezifikationen sind:
Metallische Quadratmaschentextile:
   - Drahtdurchmesser: 0,050mm
   - Gewebedicke: 100µm (oder kalandriert bis auf ca. 70µm)
   - Maschenweite: 0,052mm
   - Maschenfläche zu Textilgesamtfläche: 25,8%
Metallische Quadratmaschentextile:
   - Drahtdurchmesser: 0,070mm
   - Gewebedicke: 150µm (oder kalandriert bis auf ca. 113µm)
   - Maschenweite: 0,080mm
   - Maschenfläche zu Textilgesamtfläche: 27%

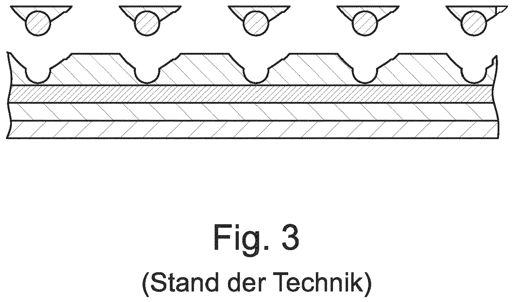

Figur 3 zeigt ein Ausführungsbeispiel, bei dem die Verwendung von offenenmaschigen Geweben von mehr als 30 % zu einem partiellen Kohäsionsbruch führen kann. Hierbei verläuft der Riss in den offenen Bereichen des Gewebes zunächst kohäsiv durch das Matrixharz, gelangt dann jedoch an die Bauteiloberfläche, bevor der nächste Gewebedraht erreicht ist. Dadurch entstehen mittig in den Bereichen der Gewebeöffnungen ungebrochene Bereiche, die schlecht klebbar sind.

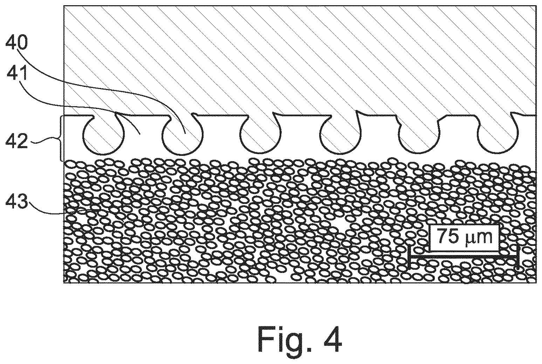

Figur 4 zeigt in einer Makroskopaufnahme einen entstandenen Abdruck beim Abschälen des Abreißtextils von dem hergestellten Bauteil mit Fasermaterial 43 in einem Querschnitt. In der durch das Abreißtextil gebildeten Matrixschicht 42 sind Drahtabdrücke 40 gebildet worden, die eine Art Vertiefung darstellen, in die später der zu applizierenden Werkstoff hineingedrückt werden kann. Es werden somit durch die Metalldrähte des metallischen Abreißtextils Hohlräume 40 in der gebildeten Matrixschicht 42 erzeugt, die durch entsprechende Stege 41 des verbleibenden Matrixmaterials umschlossen werden.

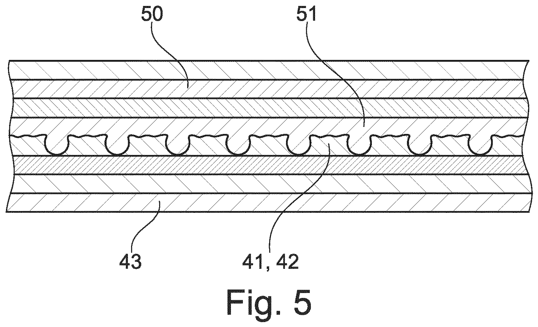

Figur 5 zeigt schließlich das Endprodukt, bei dem ein zusätzliches Bauteil 50 mithilfe eines Klebstoffes 51 auf die so vorbereitete Oberfläche gefügt wurde. Dabei wird nach dem Abreißen des Abreißtextils ein Klebstoff 51 auf die verbleibende Oberfläche aufgetragen, der die durch das Abreißtextil gebildeten Vertiefungen besetzt. Es entsteht ein effizienter Formschluss, bei dem die Verbindung einem fest verschlossenen Reißverschluss ähnelt. Dieser Formschluss bewirkt, dass die Verbindung auch dann Last übertragen kann, wenn sich keine Anhaftung (kein Stoffschluss) zwischen der vorbehandelten Oberfläche und dem darauf aufgetragenen Klebstoff/Matrixharz ausbilden sollte.

### Bezugszeichenliste

- 10 -: Faserpreform
- 11 -: Fasermaterial
- 12 -: Matrixmaterial
- 13 -: Applikationsbereich
- 14 -: kohäsiv gebrochene Oberfläche
- 20 -: Monofilamentgewebe
- 21 -: Matrixmaterial des Monofilamentgewebes
- 22 -: Gewebefäden
- 23 -: Kettfäden
- 24 -: Schussfäden
- 25 -: Maschen
- 26 -: offene Flächen
- 30 -: zu applizierender Werkstoff
- 31 -: Applikator

## Patentansprüche

1. Verfahren zum Applizieren eines Werkstoffes (30) auf ein Faserverbundbauteil innerhalb eines Applikationsbereiches (13) des Faserverbundbauteils, wobei das Faserverbundbauteil aus einem Faserverbundwerkstoff aufweisend ein Fasermaterial (11) und ein Matrixmaterial (12) hergestellt wird, wobei das Verfahren die folgenden Schritte umfasst:
- Bereitstellen zumindest eines metallischen, maschenförmigen Abreißtextils, welches aus Metallfäden als Einzelfilamente gebildet ist und bei dem die Summe aller offenen Flächen (26) der Maschen (25) des maschenförmigen Abreißtextils weniger als 30% und mehr als 10 % der gesamten Grundfläche des Abreißtextils entspricht,
- Anordnen des mindestens einen metallischen, maschenförmigen Abreißtextils auf eine aus dem Fasermaterial (11) des Faserverbundwerkstoffes gebildeten Faserpreform (10) im Applikationsbereich (13),
- Aushärten des das Fasermaterial (11) der Faserpreform (10) einbettenden Matrixmaterials (12) des Faserverbundwerkstoffes sowie ein das metallische, maschenförmige Abreißtextil einbettendes Matrixmaterial (12) in einem gemeinsamen Prozessschritt,
- wobei zumindest das das metallische, maschenförmige Abreißtextil einbettende Matrixmaterial (12) eine mit der Oxidschicht der Metallfäden des metallischen, maschenförmigen Abreißtextils chemisch reagierende und/oder physikalisch interagierende Komponente enthält, und
nachdem das Matrixmaterial (12) der Faserpreform (10) und das Matrixmaterial (12) des maschenförmigen Abreißtextils zumindest teilweise ausgehärtet ist,
- Abreißen des mit der Faserpreform (10) verbundenen metallischen, maschenförmigen Abreißtextils und
- Applizieren des Werkstoffes (30) in den Applikationsbereich (13) nach dem Abreißen des metallischen, maschenförmigen Abreißtextils.

2. Verfahren nach Anspruch 1, **dadurch gekennzeichnet, dass** die mit der Oxidschicht reagierende und/oder interagierende Komponente ein Härter ist, insbesondere ein Aminhärter ist.

3. Verfahren nach Anspruch 1 oder 2, **dadurch gekennzeichnet, dass** die mit der Oxidschicht reagierende und/oder interagierende Komponente sowohl in dem das Fasermaterial (11) der Faserpreform (10) einbettenden Matrixmaterial (12) als auch in dem das metallische, maschenförmige Abreißtextil einbettende Matrixmaterial (12) enthalten ist.

4. Verfahren nach einem der vorhergehenden Ansprüche, **dadurch gekennzeichnet, dass** das Matrixmaterial (12), welches das metallische, maschenförmige Abtreißtextil einbettet, das Matrixmaterial (12) des Faserverbundwerkstoffes ist, welches das Fasermaterial (11) der Faserpreform (10) einbettet, oder dass das Matrixmaterial (12), welches das metallischen, maschenförmige Abtreißtextil einbettet, ein von dem Matrixmaterial (12) des Faserverbundwerkstoffes, welches das Fasermaterial (11) der Faserpreform (10) einbettet, verschiedenes Material ist.

5. Verfahren nach einem der vorhergehenden Ansprüche, **dadurch gekennzeichnet, dass** das Fasermaterial (11) der Faserpreform (10) und/oder das metallische, maschenförmige Abreißtextil mit dem jeweiligen Matrixmaterial (12) vorimprägniert sind oder dass das Matrixmaterial (12) des Faserverbundwerkstoffes in einem Infusionsschritt in das Fasermaterial (11) der Faserpreform (10) infundiert wird.

6. Verfahren nach einem der vorhergehenden Ansprüche, **dadurch gekennzeichnet, dass** als Werkstoff (30) ein Klebstoff appliziert und ein weiteres Bauelement mittels des applizierten Klebstoffes an das aus der Faserpreform (10) hergestellte Faserverbundbauteil klebend gefügt wird und/oder dass als Werkstoff (30) eine Beschichtung appliziert wird.

7. Verfahren nach einem der vorhergehenden Ansprüche, **dadurch gekennzeichnet, dass** das metallische, maschenförmige Abreißtextil derart bereitgestellt wird, dass das Verhältnis von Maschenweite zur Breite der metallischen Einzelfilamente im Wesentlichen 1:1 innerhalb einer Toleranz von 10% entspricht.

8. Verfahren nach einem der vorhergehenden Ansprüche, **dadurch gekennzeichnet, dass** das metallische, maschenförmige Abreißtextil kalandriert bereitgestellt wird.

9. Verfahren nach einem der vorhergehenden Ansprüche, **dadurch gekennzeichnet, dass** das metallische, maschenförmige Abreißtextil derart bereitgestellt wird, dass die Einzelfilamente aus einem nicht-rostenden Stahl insbesondere mit einer Chrom-Oxidschicht gebildet sind.

10. Verfahren nach einem der vorhergehenden Ansprüche, **dadurch gekennzeichnet, dass** das metallische, maschenförmige Abreißtextil als Köperbindung oder Leinenbindung bereitgestellt wird.

11. Verfahren nach einem der vorhergehenden Ansprüche, **dadurch gekennzeichnet, dass** das metallische, maschenförmige Abreißtextil derart bereitgestellt wird, dass die Maschenweite zwischen 20 µm bis 150 µm, vorzugsweise von 30 µm bis 100 µm, beträgt und/oder dass die Dicke 50 µm bis 200 µm beträgt.
